# EUROPEAN PATENT SPECIFICATION

(11) **EP 3 131 214 B1**
(45) Date of publication and mention of the grant of the patent: **21.08.2019**
(21) Application number: 15779414.0
(22) Date of filing: 10.04.2015
(51) Int. Cl.: H04B 7/15

(54) **COMBINER, BASE STATION, SIGNAL COMBINER SYSTEM AND SIGNAL TRANSMISSION METHOD**
KOMBINATOR, BASISSTATION, SIGNALKOMBINATORSYSTEM UND VERFAHREN ZUR SIGNALÜBERTRAGUNG
MULTIPLEXEUR, STATION DE BASE, SYSTÈME MULTIPLEXEUR DE SIGNAUX ET PROCÉDÉ D'ÉMISSION DE SIGNAUX

(30) Priority: 14.04.2014 CN 201410148279
(43) Date of publication of application: 15.02.2017
(73) Proprietor: Huawei Technologies Co. Ltd., Shenzhen, Guangdong 518129 (CN)
(72) Inventor: ZHAO, Xing, Shenzhen Guangdong 518129 (CN); LONG, Ke, Shenzhen Guangdong 518129 (CN); LIU, Zhiyu, Shenzhen Guangdong 518129 (CN)
(74) Representative: Gill Jennings & Every LLP
(86) International application number: PCT/CN2015/076343
(87) International publication number: WO 2015/158221

(56) References cited:
- EP-A1- 1 815 291
- CN-A- 101 321 011
- CN-A- 101 321 011
- CN-A- 102 271 426
- CN-A- 102 364 749
- CN-A- 102 546 035
- CN-A- 103 607 235
- CN-A- 103 607 235
- CN-A- 103 972 629
- CN-U- 203 457 154

## Description

### TECHNICAL FIELD

Embodiments of the present invention relate to the field of communications technologies, and in particular, to a combiner, a base station, a signal combining system, and a signal transmission method.

### BACKGROUND

During wireless communication networking, multiple same-band modules of a single sector are required for networking to increase a quantity of carriers or a power due to factors such as an insufficient transmission power of a single channel and insufficient carrier resources of a single module in a downlink of a remote radio unit (Remote Radio Unit, RRU). In addition, because antenna installation platform resources are limited, multiple modules in a same sector need to share an antenna, and in this case, several same-band modules need an external combiner for output.

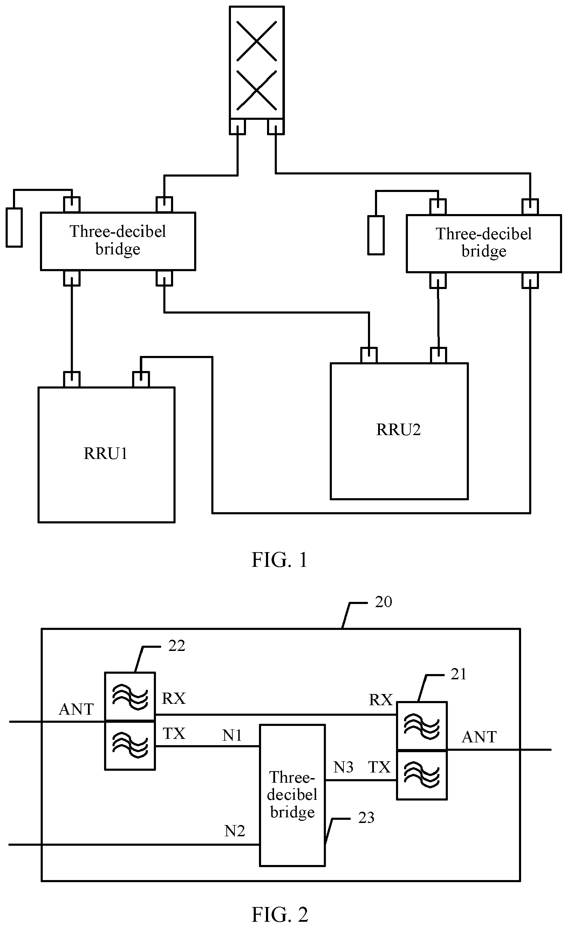

A common solution in an existing network is shown in FIG. 1; to combine two same-band modules, an existing scheme is combining outputs of the two modules by using a 3-dB bridge and then connecting the two modules to an antenna; because in the current scheme, both a transmit signal and a receive signal of a base station pass through a 3-dB bridge, an insertion loss of the bridge affects both the receive signal and the transmit signal. In a wireless communications system, most scenarios are uplink-restricted scenarios, that is, an uplink coverage radius is less than a downlink coverage radius; using a networking manner of FIG. 1 causes impact of 3 dB to 4 dB on uplink sensitivity, lowering network performance.

CN103607235 relates to antenna feed system access device and antenna feed system.

### SUMMARY

Embodiments of the present invention provide a combiner, a base station, a signal combining system, and a signal transmission method, which can reduce impact on uplink sensitivity and improve network performance.

In particular, the present disclosure provides a base station according to claim 1, a signal combining system according to claim 3, and a signal transmission method according to claim 7. Further technical features of each of these aspects are defined in the corresponding dependent claims.

It can be seen from the foregoing technical solutions, the embodiments of the present invention have the following advantages:
In the embodiments of the present invention, a combiner includes a first duplexer, a second duplexer, and a three-decibel bridge, where when a base station receives a signal from an antenna, the signal needs to be transmitted through only two duplexers but does not need to pass through the three-decibel bridge, therefore, impact caused by an insertion loss of the bridge on the signal received by the base station is avoided, that is, impact on uplink sensitivity is reduced, and network performance is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a signal combining system in the prior art;
FIG. 2 is a schematic diagram of an embodiment of a combiner according to the present invention;
FIG. 3 is a schematic diagram of an embodiment of a base station according to the present invention; and
FIG. 4 is a schematic diagram of an embodiment of a signal combining system according to the present invention.

### DESCRIPTION OF EMBODIMENTS

The invention is defined in the appended claims. The following describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention provide a base station, a signal combining system, and a signal transmission method, which can reduce impact on uplink sensitivity and improve network performance.

Referring to FIG. 2, FIG. 2 is a schematic diagram a combiner including: a first duplexer 21, a second duplexer 22, and a three-decibel bridge 23.

An ANT end of the first duplexer 21 is connected to an antenna (not shown in the figure), an Rx end of the first duplexer 21 is connected to an Rx end of the second duplexer 22 and is configured to input, to a base station (not shown in the figure), a signal received from the antenna, and an ANT end of the second duplexer 22 is connected to the base station.

A Tx end of the second duplexer 22 is connected to a first input end N1 of the three-decibel bridge 23 and is configured to send, to the three-decibel bridge 23, a signal received from the base station, a second input end N2 of the three-decibel bridge 23 is connected to the base station and is configured to receive a signal sent by the base station, and an output end N3 of the three-decibel bridge is connected to a Tx end of the first duplexer 21 and is configured to combine the signals received by the N1 end and the N2 end and send a combined signal to the first duplexer 21, so as to output the combined signal to the antenna by using the first duplexer 21.

In specific implementation, the signals input through the first input end N1 and the second input end N2 of the three-decibel bridge belong to a same frequency band, that is, the combiner provided in this embodiment may be configured to combine signals of a same frequency band.

In this example, the combiner includes a first duplexer, a second duplexer, and a three-decibel bridge, where when a base station sends a signal to an antenna, the signal is transmitted through the two duplexers and the three-decibel bridge; when the base station receives a signal from the antenna, the signal needs to be transmitted through only two duplexers but does not need to pass through the three-decibel bridge; therefore, impact caused by an insertion loss of the bridge on the signal received by the base station is avoided, that is, impact on uplink sensitivity is reduced, and network performance is improved.

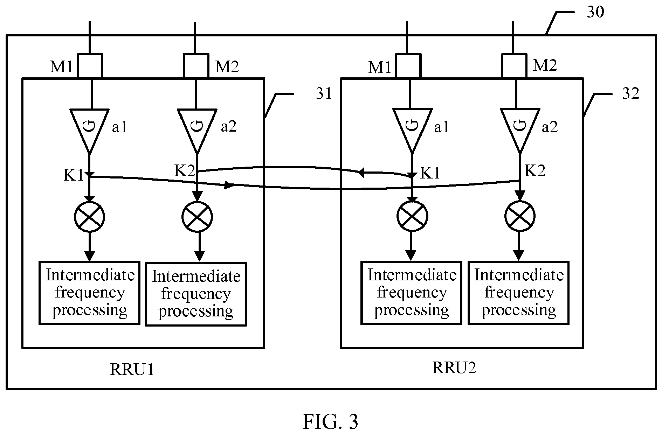

A base station provided by an embodiment of the present invention is described in the following. Referring to FIG. 3, a base station 30 includes: a first remote radio unit 31 and a second remote radio unit 32.

A K1 node of the first remote radio unit 31 is connected to a K2 node of the second remote radio unit 32 and is configured to split a signal received by the first remote radio unit 31 from a first combiner (not shown in the figure).

A K2 node of the first remote radio unit 31 is connected to a K1 node of the second remote radio unit 32 and is configured to split a signal received by the second remote radio unit 32 from a second combiner (not shown in the figure).

In specific implementation, both the signal received by the first remote radio unit 31 from the first combiner and the signal received by the second remote radio unit 32 from the second combiner may be sent by an antenna; the base station 21 may be a distributed base station, and in addition to the first remote radio unit 31 and the second remote radio unit 32, may further include a base band unit (Base Band Unit, BBU), which is not specifically limited herein.

In specific implementation, the first remote radio unit 31 receives, by using an M1 port of the first remote radio unit 31, a signal that is sent by the first combiner and that is received from the antenna; after being amplified by an amplifier a1 in the first remote radio unit 31, the signal is split to the second remote radio unit 32 by using the K2 node of the second remote radio unit 32, where the K2 node of the second remote radio unit is connected to the K1 node of the first remote radio unit 31; in this case, an amplifier a2 connected to the K2 node of the second remote radio unit may power off or have a switch unconnected.

Correspondingly, the second remote radio unit 32 also receives, by using an M1 port of the second remote radio unit 32, a signal that is sent by the second combiner and that is received from the antenna; after being amplified by an amplifier a1 in the second remote radio unit 32, the signal is split to the first remote radio unit 31 by using the K2 node of the first remote radio unit 31, where the K2 node of the first remote radio unit 31 is connected to the K1 node of the second remote radio unit 32; in this case, an amplifier a2 connected to the K2 node of the first remote radio unit may power off or have a switch unconnected.

In this embodiment, when the base station receives a signal, a signal passing through the first remote radio unit is amplified by an amplifier of the first remote radio unit and is then split to the second remote radio unit; meanwhile, a signal passing through the second remote radio unit is amplified by an amplifier of the second remote radio unit and is then split to the first remote radio unit; in this manner, impact on sensitivity of a receive signal of the base station can be reduced.

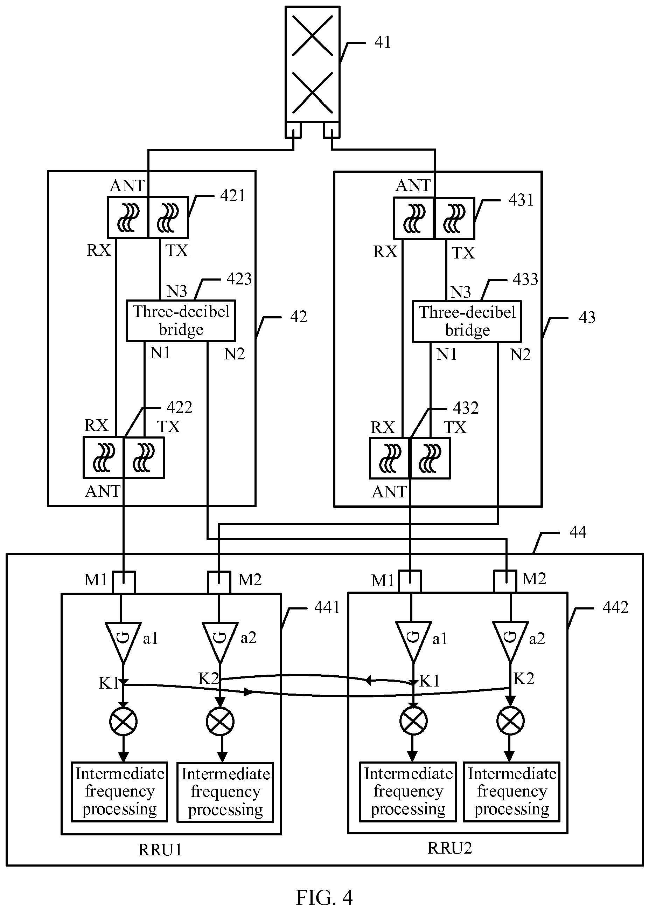

A signal combining system provided by an embodiment of the present invention is described in the following. Referring to FIG. 4, the signal combining system includes an antenna 41, a first combiner 42, a second combiner 43, and a base station 44, where the base station 44 includes a first remote radio unit 441 and a second remote radio unit 442.

It should be noted that the first combiner 42 and the second combiner 43 may have a same structure as the combiner shown in FIG. 2, the base station 44 may have a same structure as the base station shown in FIG. 3, and specific structures are not described in detail herein; a networking manner of the system may be as follows:
An ANT end of a second duplexer 422 of the first combiner 42 is connected to a first port M1 of the first remote radio unit 441 and is configured to receive and send a signal between the base station 44 and the antenna 41, a second input end N2 of a three-decibel bridge 423 of the first combiner 42 is connected to a second port M2 of the second remote radio unit 442 and is configured to send, to the antenna 41, a signal received from the base station 44, and an ANT end of a first duplexer 421 of the first combiner 42 is connected to the antenna 41.

An ANT end of a second duplexer 432 of the second combiner 43 is connected to a first port M1 of the second remote radio unit 442 and is configured to receive and send a signal between the base station 44 and the antenna 41, a second input end N2 of a three-decibel bridge 433 of the second combiner 43 is connected to a second port M2 of the first remote radio unit 441 and is configured to send, to the antenna 41, a signal received from the base station 44, and an ANT end of a first duplexer 431 of the second combiner 43 is connected to the antenna 41.

A working process of the signal combining system is described below by using an example:
When the base station 44 receives a signal from the antenna 41, the signal transmitted by the antenna 41 enters the first combiner 42 from the ANT end of the first duplexer 421 of the first combiner 42, then the signal is sent to an Rx end of the second duplexer 422 from an Rx end of the first duplexer 421, and at last, the signal is sent to the base station 44 by using the ANT end of the second duplexer 422; the base station 44 receives, by using the M1 port of the first remote radio unit 441, a signal sent by the ANT end of the second duplexer 422 of the first combiner 42, and after being amplified by an amplifier a1 in the first remote radio unit 441, the signal is split to the second remote radio unit 442 by using a K2 node of the second remote radio unit 442, where the K2 node of the second remote radio unit 442 is connected to a K1 node of the first remote radio unit 441; in this case, an amplifier a2 connected to the K2 node of the second remote radio unit 442 may power off or have a switch unconnected.

In addition, a signal transmitted by the antenna 41 further enters the second combiner 43 by using the ANT end of the first duplexer 431 of the second combiner 43, then the signal is sent to an Rx end of the second duplexer 432 from an Rx end of the first duplexer 431, and at least, the signal is sent to the base station 44 by using the ANT end of the second duplexer 432; the base station 44 receives, by using the M1 port of the second remote radio unit 442, a signal sent by the ANT end of the second duplexer 432 of the second combiner 43, after being amplified by an amplifier a1 in the second remote radio unit 442, the signal is split to the first remote radio unit 441 by using a K2 node of the first remote radio unit 441, where the K2 node of the first remote radio unit 441 is connected to a K1 node of the second remote radio unit 442; in this case, an amplifier a2 connected to the K2 node of the first remote radio unit 441 may power off or have a switch unconnected.

When the base station 44 sends a signal to the antenna 41, the signal transmitted by the base station 44 passes through the M1 port of the first remote radio unit 441 and the M2 port of the second remote radio unit 442, to separately enter the ANT end of the second duplexer 422 of the first combiner 42 and the second input end N2 of the three-decibel bridge 423 of the first combiner 42; the second duplexer 422 sends, to a first input end N1 of the three-decibel bridge 423 by using a Tx end of the second duplexer 422, the received signal transmitted by the base station 44; after the three-decibel bridge 423 combines the signals at the two input ends, a combined signal is output to a Tx end of the first duplexer 421 by using an output end N3 of the three-decibel bridge 423, and the ANT end of the first duplexer 421 outputs the signal to the antenna 41.

In addition, the signal transmitted by the base station 44 further passes through the M2 port of the first remote radio unit 441 and the M1 port of the second remote radio unit 442, to separately enter the second input end N2 of the three-decibel bridge 433 of the second combiner 43 and the ANT end of the second duplexer 432 of the second combiner 43, the second duplexer 432 sends, to a first input end N1 of the three-decibel bridge 433 by using a Tx end of the second duplexer 432, the received signal transmitted by the base station 44; after the three-decibel bridge 433 combines the signals at the two input ends, a combined signal is output to a Tx end of the first duplexer 431 by using an output end N3 of the three-decibel bridge 433, and the ANT end of the first duplexer 431 outputs the signal to the antenna 41.

It can be seen from the above description that when the base station 44 receives a signal from the antenna 41, the signal only passes through the duplexers in the two combiners and does not pass through the three-decibel bridges in the two combiners. Therefore, impact caused by an insertion loss of the bridges on a receive signal is avoided. In addition, when the signal is transmitted to the base station, the signal is first amplified by an amplifier in one of two remote radio units and then is split to the other remote radio unit, ensuring an original diversity reception function of the remote radio unit and reducing impact on signal sensitivity. When the base station 44 sends a signal to the antenna 41, the signal passes through the three-decibel bridges in the two combiners. Therefore, impact on sensitivity of a transmit signal is the same as that of a traditional scheme.

After networking is performed in a networking manner provided in this embodiment, uplink sensitivity is degraded to be: a penalty of main Rx (Receiver) is equal to an insertion loss of a receive part of a combiner, and a penalty of diversity Rx (Receiver) is equal to the insertion loss of the receive part of the combiner plus a penalty to a noise coefficient caused by a signal that is split after being amplified by an amplifier of a remote radio unit. Compared with an existing networking manner, a penalty to uplink sensitivity in the networking manner provided in this embodiment is far less than a penalty to uplink sensitivity in an existing solution of directly using two three-decibel bridges. Therefore, network performance is improved.

The embodiments of the present invention further provide a method for transmitting a signal by a combiner and a method for transmitting a signal by a base station. Refer to the content described in the embodiment corresponding to FIG. 4 for a specific process, and details are not described herein again.

In addition, it should be noted that the described apparatus embodiments is merely exemplary. The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments. In addition, in the accompanying drawings of the apparatus embodiments provided by the present invention, connection relationships between the units indicate that the units have communication connections with each other, which may be specifically implemented as one or more communications buses or signal cables. A person of ordinary skill in the art may understand and implement the embodiments of the present invention without creative efforts.

Based on the description of the foregoing implementation manners, a person skilled in the art may clearly understand that the present invention may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The computer software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

A base station, a signal combining system, and a signal transmission method that are provided by the embodiments of the present invention are described in detail in the above. A person of ordinary skill in the art may, based on the idea of the embodiments of the present invention, make modifications with respect to the specific implementation manners and the application scope. Therefore, the content of this specification shall not be construed as a limitation to the present invention. The scope of protection is defined in the appended claims.

## Claims

1. Abase station (44), comprising:
a first remote radio unit (441) and a second remote radio unit (442), **characterized in that**
a K1 node of the first remote radio unit (441) is connected to a K2 node of the second remote radio unit (442), in order to split a signal received by the first remote radio unit (441) from a first combiner (42); and
a K2 node of the first remote radio unit (441) is connected to a K1 node of the second remote radio unit (442), in order to split a signal received by the second remote radio unit (442) from a second combiner (43).

2. The base station according to claim 1, wherein when the signal received by the first remote radio unit (441) from the first combiner (42) is split, an amplifier connected to the K2 node of the second remote radio unit (442) powers off or has a switch unconnected; and
when the signal received by the second remote radio unit (442) from the second combiner (43) is split, an amplifier connected to the K2 node of the first remote radio unit (441) powers off or has a switch unconnected.

3. A signal combining system, comprising: an antenna (41) and a first combiner (42), a second combiner (43), and a base station (44) according to claim 1 or 2, wherein each combiner (41, 42) comprises:
a first duplexer (421, 431), a second duplexer (422, 432), and a three-decibel bridge (423, 433), wherein
an ANT end of the first duplexer (421, 431) is configured to connect to the antenna (41), an Rx end of the first duplexer (421, 431) is connected to an Rx end of the second duplexer (422, 432), in order to input, to the base station (44), a signal received from the antenna (41), and a Tx end of the first duplexer (421, 431) is connected to an output end of the three-decibel bridge (423, 433), in order to output, to the antenna (41), a combined signal output from the three-decibel bridge (423, 433); and
an ANT end of the second duplexer (422, 432) is configured to connect to the base station (44), a first input end of the three-decibel bridge (423, 433) is connected to a Tx end of the second duplexer (422, 432), in order to receive a signal that is sent by the second duplexer (422, 432) and that is received by the second duplexer (422, 432) from the base station (44), and a second input end of the three-decibel bridge (423, 433) is configured to connect to the base station (44), in order to receive a signal sent by the base station (44).

4. The signal combining system according to claim 3, wherein the first input end and the second input end of the three-decibel bridge (423, 433) in each combiner (42, 43) are configured to receive signals belonging to a same frequency band.

5. The signal combining system according to claim 3 or 4, wherein the ANT end of the second duplexer (422) of the first combiner (42) is connected to the base station (44), in order to receive and send a signal between the base station (44) and the antenna (41), the second input end of the three-decibel bridge (423) of the first combiner (42) is connected to the base station (44), in order to send, to the antenna (41), a signal received from the base station (44), and the ANT end of the first duplexer (421) of the first combiner (42) is connected to the antenna (41); and
the ANT end of the second duplexer (432) of the second combiner (43) is connected to the base station (44), in order to receive and send a signal between the base station (44) and the antenna (41), the second input end of the three-decibel bridge (433) of the second combiner (43) is connected to the base station (44), in order to send, to the antenna (41), a signal received from the base station (44), and the ANT end of the first duplexer (431) of the second combiner (43) is connected to the antenna (41).

6. The signal combining system according to any of claims 3 to 5, wherein
the ANT end of the second duplexer (422) of the first combiner (42) is connected to a first port of the first remote radio unit (441), in order to receive and send a signal between the base station (44) and the antenna (41), the second input end of the three-decibel bridge (423) of the first combiner (42) is connected to a second port of the second remote radio unit (442), in order to send, to the antenna (41), a signal received from the base station (44), and the ANT end of the first duplexer (421) of the first combiner (42) is connected to the antenna (41); and
the ANT end of the second duplexer (432) of the second combiner (43) is connected to a first port of the second remote radio unit (442), in order to receive and send a signal between the base station (44) and the antenna (41), the second input end of the three-decibel bridge (433) of the second combiner (43) is connected to a second port of the first remote radio unit (441), in order to send, to the antenna (41), a signal received from the base station (44), and the ANT end of the first duplexer (431) of the second combiner (43) is connected to the antenna (41).

7. A signal transmission method, **characterized by** comprising:
splitting, by a first remote radio unit (441) of a base station (44) through a K1 node of the first remote radio unit (441), a signal received by the first remote radio unit (441) from a combiner (42), wherein the K1 node of the first remote radio unit (441) is connected to a K2 node of a second remote radio unit (442) of the base station; and
receiving, by a first remote radio unit (441) through a K2 node of the first remote radio unit (441), a signal split by the second remote radio unit (442) of the base station (44), wherein the K2 node of the first remote radio unit (441) is connected to a K1 node of the second remote radio unit (442) of the base station (44).

8. The signal transmission method according to claim 7, wherein when the signal received by the first remote radio unit (441) from the combiner (42) is split, an amplifier connected to the K2 node of the second remote radio unit (442) powers off or has a switch unconnected; and
when receiving the signal split by the second remote radio unit (442) of the base station (44), an amplifier connected to the K2 node of the first remote radio unit (441) powers off or has a switch unconnected.

9. The signal transmission method according to claim 7 or 8, further comprising:
receiving, by the combiner (42) by using an ANT end of a first duplexer (421), a signal transmitted by an antenna (41), sending, to an Rx end of a second duplexer (422) by using an Rx end of the first duplexer (421), the received signal transmitted by the antenna (41), and sending, by the combiner (42) to the base station (44) by using an ANT end of the second duplexer (422), the received signal transmitted by the antenna (41); and
receiving, by the combiner (42) by using the ANT end of the second duplexer (422), a signal transmitted by the base station (44), sending, to a first input end of a three-decibel bridge (423) by using a Tx end of the second duplexer (422), the received signal transmitted by the base station (44), receiving, by the combiner (42) by using a second input end of the three-decibel bridge (423), a signal transmitted by the base station (44), combining, by the combiner (42) by using the three-decibel bridge (423), the signals received by the first input end and the second input end, then outputting a combined signal to a Tx end of the first duplexer (421) by using an output end of the three-decibel bridge (423), and outputting, by the combiner (42) to the antenna (41) by using the ANT end of the first duplexer (421), the combined signal output from the three-decibel bridge (423).

10. The signal transmission method according to any claims 7 to 9, wherein the signals received by the first input end and the second input end of the three-decibel bridge (423) belong to a same frequency band.

## Patentansprüche

1. Basisstation (44), die Folgendes umfasst:
eine erste Fernfunkeinheit (441) und eine zweite Fernfunkeinheit (442), **dadurch gekennzeichnet, dass**
ein K1-Knoten der ersten Fernfunkeinheit (441) mit einem K2-Knoten der zweiten Fernfunkeinheit (442) verbunden ist, um ein durch die erste Fernfunkeinheit (441) von einem ersten Kombinator (42) empfangenes Signal zu teilen; und
ein K2-Knoten der ersten Fernfunkeinheit (441) mit einem K1-Knoten der zweiten Fernfunkeinheit (442) verbunden ist, um ein durch die zweite Fernfunkeinheit (442) von einem zweiten Kombinator (43) empfangenes Signal zu teilen.

2. Basisstation nach Anspruch 1,
wobei, wenn das durch die erste Fernfunkeinheit (441) von dem ersten Kombinator (42) empfangene Signal geteilt wird, ein mit dem K2-Knoten der zweiten Fernfunkeinheit (442) verbundener Verstärker ausgeschaltet wird oder einen Schalter trennt; und
wenn das durch die zweite Fernfunkeinheit (442) von dem zweiten Kombinator (43) empfangene Signal geteilt wird, ein mit dem K2-Knoten der ersten Fernfunkeinheit (441) verbundener Verstärker ausgeschaltet wird oder einen Schalter trennt.

3. Signalkombinationssystem, das Folgendes umfasst: eine Antenne (41) und einen ersten Kombinator (42), einen zweiten Kombinator (43) und eine Basisstation (44) nach Anspruch 1 oder 2, wobei jeder Kombinator (41, 42) Folgendes umfasst:
einen ersten Duplexer (421, 431), einen zweiten Duplexer (422, 432) und eine Drei-Dezibel-Brücke (423, 433), wobei
ein ANT-Ende des ersten Duplexers (421, 431) ausgelegt ist zum Verbinden mit der Antenne (41), ein Rx-Ende des ersten Duplexers (421, 431) mit einem Rx-Ende des zweiten Duplexers (422, 432) verbunden ist, um, in die Basisstation (44), ein von der Antenne (41) empfangenes Signal einzugeben, und ein Tx-Ende des ersten Duplexers (421, 431) mit einem Ausgangsende der Drei-Dezibel-Brücke (423, 433) verbunden ist, um, an die Antenne (41), ein von der Drei-Dezibel-Brücke (423, 433) ausgegebenes kombiniertes Signal auszugeben; und
ein ANT-Ende des zweiten Duplexers (422, 432) ausgelegt ist zum Verbinden mit der Basisstation (44), ein erstes Eingangsende der Drei-Dezibel-Brücke (423, 433) mit einem Tx-Ende des zweiten Duplexers (422, 432) verbunden ist, um ein Signal zu empfangen, das durch den zweiten Duplexer (422, 432) gesendet wird und das durch den zweiten Duplexer (422, 432) von der Basisstation (44) empfangen wird, und ein zweites Eingangsende der Drei-Dezibel-Brücke (423, 433) ausgelegt ist zum Verbinden mit der Basisstation (44), um ein durch die Basisstation (44) gesendetes Signal zu empfangen.

4. Das Signalkombinationssystem nach Anspruch 3, wobei das erste Eingangsende und das zweite Eingangsende der Drei-Dezibel-Brücke (423, 433) in jedem Kombinator (42, 43) dazu ausgelegt sind, Signale zu empfangen, die zu einem gleichen Frequenzband gehören.

5. Signalkombinationssystem nach Anspruch 3 oder 4, wobei das ANT-Ende des zweiten Duplexers (422) des ersten Kombinators (42) mit der Basisstation (44) verbunden ist, um ein Signal zwischen der Basisstation (44) und der Antenne (41) zu empfangen und zu senden, das zweite Eingangsende der Drei-Dezibel-Brücke (423) des ersten Kombinators (42) mit der Basisstation (44) verbunden ist, um, an die Antenne (41), ein von der Basisstation (44) empfangenes Signal zu senden, und das ANT-Ende des ersten Duplexers (421) des ersten Kombinators (42) mit der Antenne (41) verbunden ist; und
das ANT-Ende des zweiten Duplexers (432) des zweiten Kombinators (43) mit der Basisstation (44) verbunden ist, um ein Signal zwischen der Basisstation (44) und der Antenne (41) zu empfangen und zu senden, das zweite Eingangsende der Drei-Dezibel-Brücke (433) des zweiten Kombinators (43) mit der Basisstation (44) verbunden ist, um, an die Antenne (41), ein von der Basisstation (44) empfangenes Signal zu senden, und das ANT-Ende des ersten Duplexers (431) des zweiten Kombinators (43) mit der Antenne (41) verbunden ist.

6. Signalkombinationssystem nach einem der Ansprüche 3 bis 5, wobei:
das ANT-Ende des zweiten Duplexers (422) des ersten Kombinators (42) mit einem ersten Anschluss der ersten Fernfunkeinheit (441) verbunden ist, um ein Signal zwischen der Basisstation (44) und der Antenne (41) zu empfangen und zu senden, das zweite Eingangsende der Drei-Dezibel-Brücke (423) des ersten Kombinators (42) mit einem zweiten Anschluss der zweiten Fernfunkeinheit (442) verbunden ist, um, an die Antenne (41), ein von der Basisstation (44) empfangenes Signal zu senden, und das ANT-Ende des ersten Duplexers (421) des ersten Kombinators (42) mit der Antenne (41) verbunden ist; und
das ANT-Ende des zweiten Duplexers (432) des zweiten Kombinators (43) mit einem zweiten Anschluss der ersten Fernfunkeinheit (442) verbunden ist, um ein Signal zwischen der Basisstation (44) und der Antenne (41) zu empfangen und zu senden, das zweite Eingangsende der Drei-Dezibel-Brücke (433) des zweiten Kombinators (43) mit einem zweiten Anschluss der ersten Fernfunkeinheit (441) verbunden ist, um, an die Antenne (41), ein von der Basisstation (44) empfangenes Signal zu senden, und das ANT-Ende des ersten Duplexers (431) des zweiten Kombinators (43) mit der Antenne (41) verbunden ist.

7. Signalübertragungsverfahren, **dadurch gekennzeichnet, dass** es Folgendes umfasst:
Teilen, durch eine erste Fernfunkeinheit (441) einer Basisstation (44) über einen Kl-Knoten der ersten Fernfunkeinheit (441), eines durch die erste Fernfunkeinheit (441) von einem Kombinator (42) empfangenen Signals, wobei der K1-Knoten der ersten Fernfunkeinheit (441) mit einem K2-Knoten einer zweiten Fernfunkeinheit (442) der Basisstation verbunden ist; und
Empfangen, durch eine erste Fernfunkeinheit (441) über einen K2-Knoten der ersten Fernfunkeinheit (441), eines durch die zweite Fernfunkeinheit (442) der Basisstation (44) geteilten Signals, wobei der K2-Knoten der ersten Fernfunkeinheit (441) mit einem K1-Knoten der zweiten Fernfunkeinheit (442) der Basisstation (44) verbunden ist.

8. Signalübertragungsverfahren nach Anspruch 7, wobei, wenn das durch die erste Fernfunkeinheit (441) von dem Kombinator (42) empfangene Signal geteilt wird, ein mit dem K2-Knoten der zweiten Fernfunkeinheit (442) verbundener Verstärker ausgeschaltet wird oder einen Schalter trennt; und
wenn das durch die zweite Fernfunkeinheit (442) der Basisstation (44) geteilte Signal empfangen wird, ein mit dem K2-Knoten der ersten Fernfunkeinheit (441) verbundener Verstärker ausgeschaltet wird oder einen Schalter trennt.

9. Signalübertragungsverfahren nach Anspruch 7 oder 8, das ferner Folgendes umfasst:
Empfangen, durch den Kombinator (42) unter Verwendung eines ANT-Endes eines ersten Duplexers (421), eines durch eine Antenne (41) übertragenen Signals, Senden, an ein Rx-Ende eines zweiten Duplexers (422) unter Verwendung eines Rx-Endes des ersten Duplexers (421), des empfangenen Signals, übertragen durch die Antenne (41), und Senden, durch den Kombinator (42) an die Basisstation (44) unter Verwendung eines ANT-Endes des zweiten Duplexers (422), des empfangenen Signals, übertragen durch die Antenne (41); und
Empfangen, durch den Kombinator (42) unter Verwendung des ANT-Endes des zweiten Duplexers (422), eines durch die Basisstation (44) übertragenen Signals, Senden, an ein erstes Eingangsende einer Drei-Dezibel-Brücke (423) unter Verwendung eines Tx-Endes des zweiten Duplexers (422), des empfangenen Signals, übertragen durch die Basisstation (44), Empfangen, durch den Kombinator (42) unter Verwendung eines zweiten Eingangsendes der Drei-Dezibel-Brücke (423), eines durch die Basisstation (44) übertragenen Signals, Kombinieren, durch den Kombinator (42) unter Verwendung der Drei-Dezibel-Brücke (423), der durch das erste Eingangsende und das zweite Eingangsende empfangenen Signale, und dann Ausgeben eines kombinierten Signals an ein Tx-Ende des ersten Duplexers (421) unter Verwendung eines Ausgangsendes der Drei-Dezibel-Brücke (423) und Ausgeben, durch den Kombinator (42) an die Antenne (41) unter Verwendung des ANT-Endes des ersten Duplexers (421), des von der Drei-Dezibel-Brücke (423) ausgegebenen kombinierten Signals.

10. Signalübertragungsverfahren nach einem der Ansprüche 7 bis 9, wobei die durch das erste Eingangsende und das zweite Eingangsende der Drei-Dezibel-Brücke (423) empfangenen Signale zu einem gleichen Frequenzband gehören.

## Revendications

1. Station de base (44), comprenant :
une première unité radio à distance (441) et une seconde unité radio à distance (442), **caractérisée en ce que**
un noeud K1 de la première unité radio à distance (441) est connecté à un noeud K2 de la seconde unité radio à distance (442) afin de diviser un signal reçu par la première unité radio à distance (441) depuis un premier multiplexeur (42) ; et
un noeud K2 de la première unité radio à distance (441) est connecté à un noeud K1 de la seconde unité radio à distance (442) afin de diviser un signal reçu par la seconde unité radio à distance (442) depuis un second multiplexeur (43).

2. Station de base selon la revendication 1, dans laquelle lorsque le signal reçu par la première unité radio à distance (441) depuis le premier multiplexeur (42) est divisé, un amplificateur connecté au noeud K2 de la seconde unité radio à distance (442) se met hors tension ou son commutateur est déconnecté ; et
lorsque le signal reçu par la seconde unité radio à distance (442) depuis le second multiplexeur (43) est divisé, un amplificateur connecté au noeud K2 de la première unité radio à distance (441) se met hors tension ou son commutateur est déconnecté.

3. Système de combinaison de signal, comprenant : une antenne (41) et un premier multiplexeur (42), un second multiplexeur (43) et une station de base (44) selon la revendication 1 ou 2, dans lequel chaque multiplexeur (41, 42) comprend :
un premier duplexeur (421, 431), un second duplexeur (422, 432) et un pont à trois décibels (423, 433), dans lequel
une extrémité ANT du premier duplexeur (421, 431) est configurée pour se connecter à l'antenne (41), une extrémité de réception Rx du premier duplexeur (421, 431) est connectée à une extrémité Rx du second duplexeur (422, 432), afin d'entrer, dans la station de base (44), un signal reçu depuis l'antenne (41), et une extrémité d'émission Tx du premier duplexeur (421, 431) est connectée à une extrémité de sortie du pont à trois décibels (423, 433), afin d'émettre en sortie, vers l'antenne (41), un signal combiné émis en sortie depuis le pont à trois décibels (423, 433) ; et
une extrémité ANT du second duplexeur (422, 432) est configurée pour se connecter à la station de base (44), une première extrémité d'entrée du pont à trois décibels (423, 433) est connectée à une extrémité Tx du second duplexeur (422, 432) afin de recevoir un signal envoyé par le second duplexeur (422, 432) et reçu par le second duplexeur (422, 432) depuis la station de base (44), et une seconde extrémité d'entrée du pont à trois décibels (423, 433) est configurée pour se connecter à la station de base (44) afin de recevoir un signal envoyé par la station de base (44).

4. Système de combinaison de signal selon la revendication 3, dans lequel la première extrémité d'entrée et la seconde extrémité d'entrée du pont à trois décibels (423, 433) de chaque multiplexeur (42, 43) sont configurées pour recevoir des signaux appartenant à une même bande de fréquence.

5. Système de combinaison de signal selon la revendication 3 ou 4, dans lequel l'extrémité ANT du second duplexeur (422) du premier multiplexeur (42) est connectée à la station de base (44) afin de recevoir et d'envoyer un signal entre la station de base (44) et l'antenne (41), la seconde extrémité d'entrée du pont à trois décibels (423) du premier multiplexeur (42) est connectée à la station de base (44) afin d'envoyer à l'antenne (41) un signal reçu depuis la station de base (44), et l'extrémité ANT du premier duplexeur (421) du premier multiplexeur (42) est connectée à l'antenne (41) ; et
l'extrémité ANT du second duplexeur (432) du second multiplexeur (43) est connectée à la station de base (44) afin de recevoir et d'envoyer un signal entre la station de base (44) et l'antenne (41), la seconde extrémité d'entrée du pont à trois décibels (433) du second multiplexeur (43) est connectée à la station de base (44) afin d'envoyer à l'antenne (41) un signal reçu depuis la station de base (44), et l'extrémité ANT du premier duplexeur (431) du second multiplexeur (43) est connectée à l'antenne (41).

6. Système de combinaison de signal selon l'une quelconque des revendications 3 à 5, dans lequel
l'extrémité ANT du second duplexeur (422) du premier multiplexeur (42) est connectée à un premier port de la première unité radio à distance (441) afin de recevoir et d'envoyer un signal entre la station de base (44) et l'antenne (41), la seconde extrémité d'entrée du pont à trois décibels (423) du premier multiplexeur (42) est connectée à un second port de la seconde unité radio à distance (442) afin d'envoyer à l'antenne (41) un signal reçu depuis la station de base (44), et l'extrémité ANT du premier duplexeur (421) du premier multiplexeur (42) est connectée à l'antenne (41) ; et
l'extrémité ANT du second duplexeur (432) du second multiplexeur (43) est connectée à un premier port de la seconde unité radio à distance (442) afin de recevoir et d'envoyer un signal entre la station de base (44) et l'antenne (41), la seconde extrémité d'entrée du pont à trois décibels (433) du second multiplexeur (43) est connectée à un second port de la première unité radio à distance (441) afin d'envoyer à l'antenne (41) un signal reçu depuis la station de base (44), et l'extrémité ANT du premier duplexeur (431) du second multiplexeur (43) est connectée à l'antenne (41).

7. Procédé de transmission de signal, **caractérisé en ce qu'**il comprend :
la division, par une première unité radio à distance (441) d'une station de base (44), par l'intermédiaire d'un noeud K1 de la première unité radio à distance (441), d'un signal reçu par la première unité radio à distance (441) depuis un multiplexeur (42), dans lequel le noeud K1 de la première unité radio à distance (441) est connecté à un noeud K2 d'une seconde unité radio à distance (442) de la station de base ; et
la réception, par une première unité radio à distance (441) par l'intermédiaire d'un noeud K2 de la première unité radio à distance (441), d'un signal divisé par la seconde unité radio à distance (442) de la station de base (44), dans lequel le noeud K2 de la première unité radio à distance (441) est connecté à un noeud K1 de la seconde unité radio à distance (442) de la station de base (44).

8. Procédé de transmission de signal selon la revendication 7, dans lequel lorsque le signal reçu par la première unité radio à distance (441) depuis le multiplexeur (42) est divisé, un amplificateur connecté au noeud K2 de la seconde unité radio à distance (442) se met hors tension ou son commutateur est déconnecté ; et
lors de la réception du signal divisé par la seconde unité radio à distance (442) de la station de base (44), un amplificateur connecté au noeud K2 de la première unité radio à distance (441) se met hors tension ou son commutateur est déconnecté.

9. Procédé de transmission de signal selon la revendication 7 ou 8, comprenant en outre :
la réception, par le multiplexeur (42) au moyen d'une extrémité ANT d'un premier duplexeur (421), d'un signal émis par une antenne (41), l'envoi, à une extrémité de réception Rx d'un second duplexeur (422) au moyen d'une extrémité Rx du premier duplexeur (421), du signal reçu émis par l'antenne (41), et l'envoi par le multiplexeur (42) à la station de base (44) au moyen d'une extrémité ANT du second duplexeur (422), du signal reçu émis par l'antenne (41) ; et
la réception, par le multiplexeur (42) au moyen de l'extrémité ANT du second duplexeur (422), d'un signal émis par la station de base (44), l'envoi, à une première extrémité d'entrée d'un pont à trois décibels (423) au moyen d'une extrémité d'émission Tx du second duplexeur (422), du signal reçu émis par la station de base (44), la réception par le multiplexeur (42) au moyen d'une seconde extrémité d'entrée du pont à trois décibels (423), d'un signal émis par la station de base (44), la combinaison, par le multiplexeur (42) au moyen du pont à trois décibels (423), des signaux reçus par la première extrémité d'entrée et la seconde extrémité d'entrée, puis l'émission en sortie d'un signal combiné vers une extrémité Tx du premier duplexeur (421) au moyen d'une extrémité de sortie du pont à trois décibels (423) et l'émission en sortie, par le multiplexeur (42) vers l'antenne (41) au moyen de l'extrémité ANT du premier duplexeur (421), du signal combiné émis en sortie depuis le pont à trois décibels (423).

10. Procédé de transmission de signal selon l'une quelconque des revendications 7 à 9, dans lequel les signaux reçus par la première extrémité d'entrée et la seconde extrémité d'entrée du pont à trois décibels (423) appartiennent à une même bande de fréquence.
